Europäisches Patentamt

European Patent Office

Office européen des brevets

(11) Publication number: **0 218 393**
**A1**

# (12) EUROPEAN PATENT APPLICATION

(21) Application number: **86307134.6**

(22) Date of filing: **16.09.86**

(51) Int. Cl.⁴: **H 04 N 9/75**

(30) Priority: **16.09.85 US 776543**

(43) Date of publication of application: **15.04.87**
**Bulletin 87/16**

(84) Designated Contracting States: **DE FR GB**

(71) Applicant: **The Grass Valley Group, Inc.,**
**P.O.Box 1114 Bitney Springs Road, Grass Valley,**
**CA 95945 (US)**

(72) Inventor: **Hansen, Christopher R., 11665 Squirrel Creek**
**Road, Grass Valley California 95945 (US)**

(74) Representative: **Baillie, Iain Cameron et al, c/o Ladas &**
**Parry Isartorplatz 5, D-8000 München 2 (DE)**

(54) **Chroma key system.**

(57) A video key signal generator generates a key signal from three primary color signal components. The key signal is such that when the three components are represented by equiangularly spaced vectors radiating from the origin of a polar coordinate system, the locus of points of constant key signal value can be repserented in an auxiliary Cartesian coordinate system, having the same origin as the polar coodinate system having coordinates X and Z, by a single continuous line defined by X greater than or equal to a predetermined minimum value, and Z having a single value for X equal to the predetermined minimum value and having two values for X greater than the predetermined minimum value.

## CHROMA KEY SYSTEM

This system relates to a chroma key system.

Background of the Invention

In the following description, the term "pixel" (picture element) is used to denote the smallest area of a picture, represented by a video signal, for which the color can be unambiguously determined, regardless of picture content, and is not intended to imply that the invention is restricted to digital systems.

The technique known as chroma keying is commonly used in television production to combine two genlocked video signals in such a manner that in the composite picture represented by the combined signals, a portion of the scene represented by one video signal (the foreground signal) appears in the foreground, superimposed over a background formed from a portion of the scene represented by the other signal (the background signal). This is accomplished by generating a key signal which determines, for each pixel of the scene represented by the first or foreground signal, whether the foreground scene should survive without attenuation into the composite picture or should be replaced at least partially by the corresponding pixel from the background scene. It is common to generate such a key signal from the color components of the foreground signal. Generally, this is accomplished by forming the foreground signal while the foreground subject appears against a backing screen of uniform color. The color of the screen is selected from colors that do not appear in the foreground subject. The signal representative of the foreground

scene is applied to a mixer and is combined with the signal representative of the background scene in accordance with the key signal. If a hard key is desired, the key signal ideally has a value of unity for each pixel that is the color of the screen and has a value of zero for each pixel that is another color. However, it is not desirable for the value of the key signal to depend on the presence or absence of a single color, because the screen would not in fact normally be uniform in color over its entire area. For example, even if a screen is of uniform color under uniform illumination, in practice some areas of the screen are likely to be closer than others to a source of illumination and some areas might be in shadow, with the result that the screen will not in fact appear to be uniform in color. In addition, there may be areas of different color even under uniform illumination, for example due to scuff marks or other imperfections in the screen. Therefore, in a conventional chroma key system a range of colors for which the key signal is unity is established.

Three attributes are required in order to define a color unambiguously. For example, a video camera generates three primary color component signals R, G and B, representative respectively of the intensity of the three primary colors red, green and blue. The three primary color component signals may be transformed into luminance (Y) and chrominance (or color difference) (R - Y, B - Y) components.

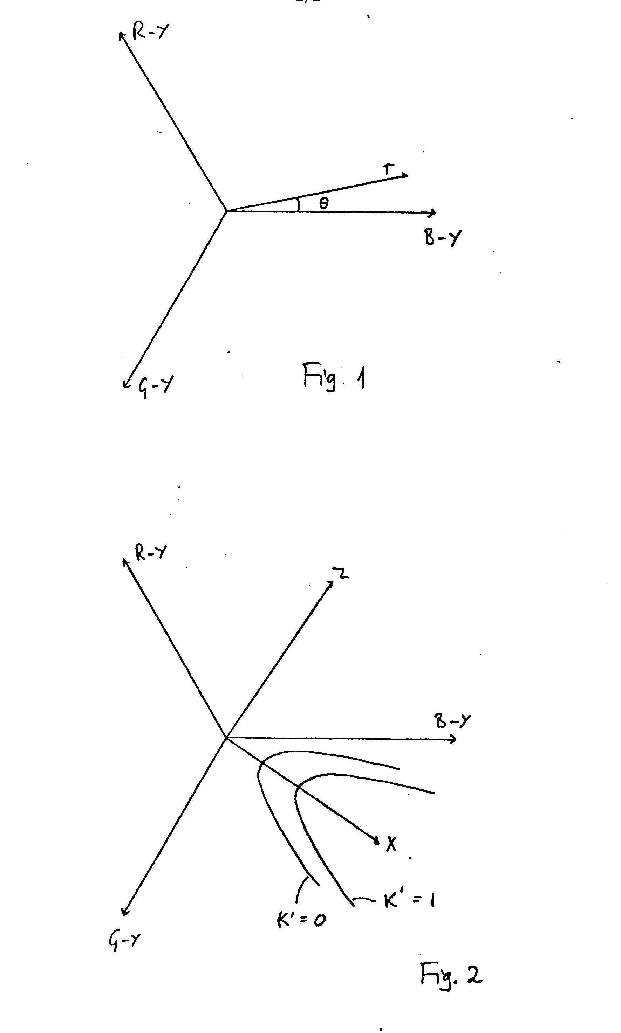

Another set of three attributes that can be used to characterize a color is hue, saturation and luminance. Hue and saturation may be represented in luminance independent fashion by a vector in a chrominance diagram, as shown in FIG. 1. In a chrominance diagram, the three color difference axes (R - Y, B - Y and G - Y) radiate from the origin or center of the diagram. The hue of a given color is represented by the angular position θ of a vector relative to a selected, e. g. B - Y, axis and the saturation of the color is represented by the magnitude of the vector. If the color difference axes are equiangularly spaced (implying equal weighting of the primary color components) and a two-dimensional Cartesian coordinate system having coordinates X, Z is superimposed over the polar coordinate system of the chrominance diagram, as shown in FIG. 2, with the origins of the two systems coinciding and the the +X axis of the Cartesian coordinate system at an angle $\phi$ to the B - Y axis of the polar coordinate system, then a color represented by the primary color signal components R, G, B may be represented in the Cartesian coordinate system by the coordinates

$$
X = \frac{\sqrt{3}}{2} (R - G) \sin \phi + [B - \frac{1}{2} (R + G)] \cos \phi
$$

$$
Z = \frac{\sqrt{3}}{2} (R - G) \cos \phi - [B - \frac{1}{2} (R + G)] \sin \phi
$$

(1)

The values of X and Z may be used to generate a key signal for a chroma key system. In V. G. Devereux, "Television Animation Store: Digital Chroma-Key and Mixer Units", BBC Research Department Report 1984/16, there is described a chroma key system in which the key signal K is represented by

K = X - a mod Z   for X > a mod Z

K = 0 for X < a mod Z

This results in V-shaped contours of constant key signal value, the V being symmetrically disposed about the X-axis with the point of the V directed towards the center of the chrominance diagram.

The color of the backing screen is often selected to be a saturated blue, but the chroma key principle is applicable to any color of backing screen, the practical limitation being that the color of the backing screen should not be present in the foreground subject. In the system described by Devereux, ideally the color of the backing screen, when illuminated, is represented in the chrominance diagram by a vector that lies on the X-axis and has a magnitude greater than the magnitude of X for K = 1. This system will allow variation in the color of the backing screen, and still produce a proper key signal, provided the color of the screen is represented by a vector that extends beyond the K = 1 contour, and it will not generate a false key signal in response to presence in the foreground object of a color having the hue represented by a vector that lies on the X-axis so long as the saturation of the color is sufficiently small. However, the system described by Devereux is subject to the disadvantage that at low values of saturation, for example in shadowed areas, it is intolerant of small variations in hue within a narrow sector centered on the X-axis. For example, if a color in the foreground scene is represented by a vector on the X-axis and has a low saturation, a slight change in the hue, for example due to a change in illumination or camera noise, may result in a large change in the corresponding value of K, and this might not be desired.

## Summary of the Invention

In a preferred embodiment of the invention, a video key signal generator generates a key signal from three signal components, and the key signal is such that when the three signal components are represented by substantially equiangularly spaced vectors radiating from the origin of a two-dimensional polar coordinate system in which the radial distance represents saturation and azimuth represents hue, a locus of points of constant key signal value can be represented in an auxiliary two-dimensional Cartesian coordinate system, having the same origin as the polar coordinate system and having coordinates $X$ and $Z$, by a single continuous line defined by $X$ greater than or equal to a predetermined minimum value, and $Z$ having a single value for $X$ equal to said predetermined minimum value and two values for $X$ greater than the predetermined minimum value.

## Brief Description of the Drawings

For a better understanding of the invention, and to show how the same may be carried into effect, reference will now be made, by way of example, to the accompanying drawings in which:

FIG. 1 is a diagram illustrating a conventional manner of representing color in a two-dimensional polar coordinate system,

FIG. 2 is a diagram similar to FIG. 1 but showing also an auxiliary rectangular Cartesian coordinate system and illustrating lines of constant key signal value obtained by use of a key signal generator in accordance with the invention, and

FIG. 3 is a block diagram of a chroma key system in accordance with the present invention.

## Detailed Description

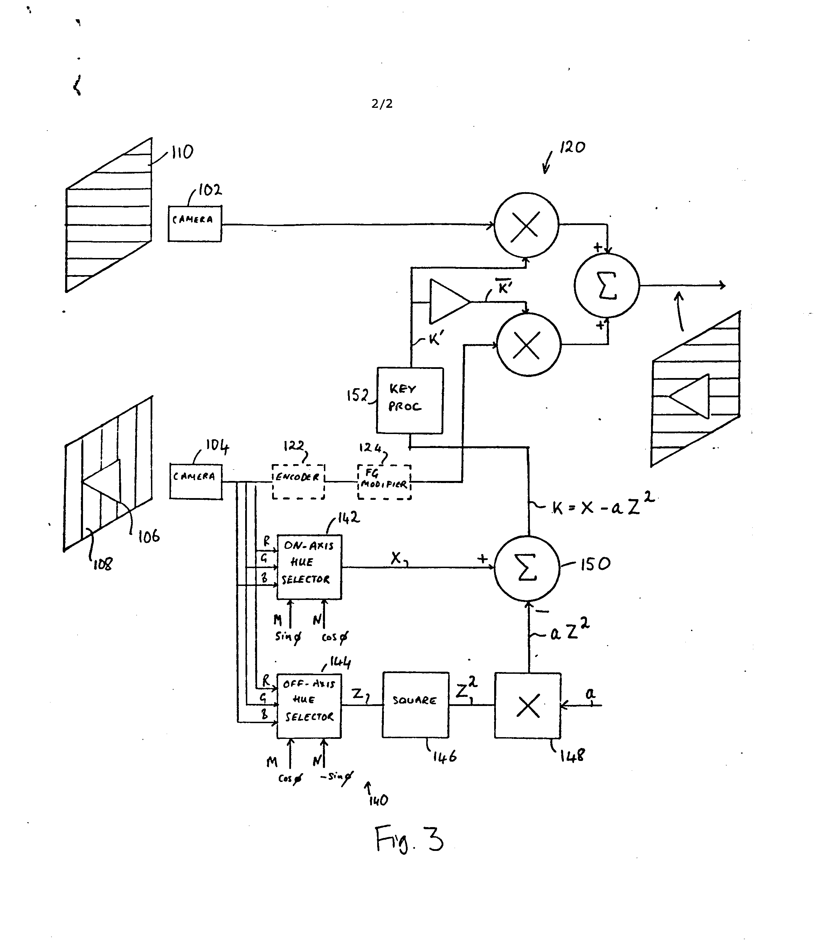

FIG. 3 illustrates diagramatically two video cameras 102 and 104, each of which generates an output video signal. The video signal generated by the camera 104 has three color components, R, G and B, and is representative of a foreground scene comprising a foreground object 106 and a backing screen 108. The signal generated by the camera 102 may be a component signal (R, G, B or Y, R - Y, B - Y, e.g.) or it may be encoded video (e.g. in the NTSC or PAL standard) and is representative of a background scene 110. The signals from the cameras 102 and 104 are applied to a mixer 120, which is of conventional form. It will be appreciated that the two video signals applied to the mixer must each be in the same form, i.e., both in component form or both in encoded form. Therefore, if the signal generated by the camera 102 is in encoded form, or is encoded prior to application to the mixer 120, an encoder 122 would be included in the signal path from the camera 104 to the mixer 120. Moreover, it may be desired to modify the foreground signal before application to the mixer, e.g. by suppressing the color of the backing screen 108, and this may be accomplished using a foreground modifier 124.

The mixer 120 is to be used to combine the signals generated by the cameras 102 and 104 to generate a signal representative of a composite scene in which the subject 106 is superimposed over the background scene 110. This compositing of scenes is accomplished in the mixer 120 by multiplying the background signal and the foreground signal by a key signal K' and its complement /K'. The key signal K' is generated from the foreground color components by a key generator 140 and a key processing circuit 152. The key generator comprises an on-axis hue selector 142 and an off-axis hue selector 144. Each of the hue selectors 142 and 144 receives not only the color components R, G and B from the foreground camera 104 but also receives at inputs M and N signals representative of trigonometric functions of an adjustable hue angle $\phi$. Each of the hue selectors is identical, and generates an output signal of the form

$$X, Z = \frac{\sqrt{3}}{2} (R - G) M + [B - \frac{1}{2} (R + G)] N \qquad (2)$$

By applying signals to the inputs M and N of the hue selector 142, that are in the relation sin $\phi$ to cos $\phi$, the output signal X becomes

$$X = \frac{\sqrt{3}}{2} (R - G) \sin \phi + [B - \frac{1}{2} (R + G)] \cos \phi$$

This represents a component along a line at an angle $\phi$ to the B-Y axis.

The signals that are applied to the hue selector 144 are representative of cos $\phi$ and -sin $\phi$, and consequently the output signal Z from the hue selector 144 has the form

$$Z = \frac{\sqrt{3}}{2} (R - G) \cos \phi - [B - \frac{1}{2} (R + G)] \sin \phi$$

The equation for Z represents a component along a line perpendicular to the line represented by the equation for X. The values of X and Z for a particular combination of values of R, G and B represent the vector (R, G, B) transformed into a Cartesian coordinate system having axes X and Z, the X-axis being inclined at an angle $\phi$ to the B - Y axis.

In the key system shown in FIG. 3, the signal Z is applied to a squaring circuit 146 and the output signal of the squaring circuit is applied to a multiplier 148 in which the signal is multiplied by a factor a. The outputs of the hue selector 142 and the multiplier 148 are combined in a subtraction network 150 to produce a signal K having the form

$$K = X - a Z^2.$$

It will therefore be seen that each contour of a constant value of K is a parabola having its directrix parallel to the Z-axis and its focus on the X-axis. The width of the parabola, i.e., the difference between the positive and negative values of Z for a given value of X, is determined by the value of a. Variation in the value of a therefore determines the selectivity of the key generator 140, i.e., the extent to which the value of K changes under a change in the value of Z.

The signal K provided by the summing network 150 is processed in conventional manner in a key processing circuit 152 and the resulting key signal K' is applied to the multipliers of the mixer 120. The processing that is done by the circuit 152 involves applying a variable offset $K_o$ to the signal K to generate a signal $K + K_o$, applying a variable gain $K_g$ to generate a signal $K' = (K + K_o)K_g$ and clipping the key signal K' to restrict it to a predetermined range of values corresponding to multiplication factors in the range from 0 to 1.

The variable offset and gain result in the parabola for K' = 0 not passing through the center of the chrominance diagram and in the parabola for K' = 1 being spaced apart along the X axis from the parabola for K' = 0. The spacing of the parabolae for K' = 0 and K' = 1 is necessary in order to allow for a smooth transition of K' between 0 and 1 and obtain a soft key.

By generating a key signal having parabolic contours of constant value, the advantages of the system described by Devereux are obtained without suffering the disadvantage of lack of tolerance to small changes in hue at small values of saturation. This disadvantage is avoided by virtue of the fact that the contour of constant key signal value is rounded and does not suffer a discontinuity when the signal X has its minimum value.

It will be appreciated that the present invention is not restricted to the particular chroma key system that has been described and illustrated, and that variations may be made therein without departing from the scope of the invention as defined in the appended claims, and equivalents thereof. For example, it is not necessary that the key signal should have parabolic contours of constant value, and other contours that avoid discontinuities at low values of saturation may be used. For example, the contours could be part circular or part elliptical in form. In addition, the particular circuit arrangement employed to generate the signal K was adopted for convenience, to minimize the need for different components, and it will therefore be understood that other circuit arrangements could be employed. Although the key signal was generated on the basis of equal weighting of R, G and B, providing equiangularly-spaced axes for R - Y, G - Y, and B - Y in the chrominance plane, other weighting factors, e.g. as in the NTSC or PAL standard, could be used and non-equiangular spacing of the axes would result. However, axes that are spaced in accordance with NTSC or PAL weighting factor are considered to be substantially equiangularly spaced, within the meaning of the present invention.

## Claims

1. A video key signal generator for generating a key signal from three primary color signal components, said key signal being such that when the three primary color signal components are represented by substantially equiangularly spaced vectors radiating from the origin of a two-dimensional polar coordinate system in which radial distance represents saturation and azimuth represents hue, the locus of points of constant key signal value can be represented in an auxiliary two-dimensional Cartesian coordinate system, having the same origin as the polar coordinate system and having coordinates X and Z, by a single continuous line defined by X greater than or equal to a predetermined minimum value, and Z having a single value for X equal to said predetermined minimum value and having two values for X greater than said predetermined minimum value.

2. A key signal generator according to claim 1, wherein the locus of points of constant key signal value is a parabola.

3. A video key signal generator according to claim 1, wherein the azimuthal position of the Cartesian coordinate system in the polar coordinate system is selectively variable.

4. A video key signal generator according to claim 1, comprising means for generating a first component of the key signal, means for generating a second component of the key signal, and means for additively combining the first and second components.

0218393

5. A video key signal generator according to claim 4, wherein the means for generating the first key signal component comprise a hue selector for generating a value of X, and the means for generating the second key signal component comprise a hue selector for generating values of Z and a squaring circuit for generating values of $Z^2$.

6. A chroma key system for combining first and second video signals each having three primary color signal components, comprising mixer means connected to receive the two video signals and to combine them in dependence upon the value of a key signal, and a video key signal generator for generating said key signal from the primary color signal components of the first video signal, said key signal being such that when the primary color signal components of the first video signal are represented by substantially equiangularly spaced vectors radiating from the origin of a two-dimensional polar coordinate system in which radial distance represents saturation and azimuth represents hue, the locus of points of constant key signal value can be represented in an auxiliary two-dimensional Cartesian coordinate system having the same origin as the polar coordinate system and having coordinates X and Z, by a single continuous line defined by X greater than or equal to a predetermined minimum value, and Z having a single value for X equal to said minimum value and two values for X greater than said predetermined minimum value.

1/2

Fig. 1

Fig. 2

2/2

Fig. 3

$K = X - aZ^2$

$\overline{K'}$

$K'$

$X$

$Z$

$Z^2$

$aZ^2$

$a$

$M$ sin$\phi$    $N$ cos$\phi$

$M$ cos$\phi$    $N$ $-$sin$\phi$

## DOCUMENTS CONSIDERED TO BE RELEVANT

EP 86307134.6

| Category | Citation of document with indication, where appropriate, of relevant passages | Relevant to claim | CLASSIFICATION OF THE APPLICATION (Int. Cl.4) |
|---|---|---|---|
| A | US - A - 4 533 937 (YAMAMOTO) <br> * Fig. 7,8A; column 4, line 59 - column 7, line 47 * <br> -- | 1-6 | H 04 N 9/75 |
| A | GB - A - 1 471 717 (ROBERT BOSCH) <br> -- | | |
| A | US - A - 4 051 520 (DAVIDSE) <br> -- | | |
| A | GB - A - 2 086 686 (BRITISH BROAD-CASTING CORPORATION) <br> -- | | |
| A | GB - A - 2 059 219 (THE GRASS VALLEY GROUP) <br> ---- | | |

TECHNICAL FIELDS SEARCHED (Int. Cl.4)

H 04 N 5/00

H 04 N 9/00

G 09 G 1/00

The present search report has been drawn up for all claims

| Place of search | Date of completion of the search | Examiner |
|---|---|---|
| VIENNA | 17-12-1986 | BENISCHKA |